# FASCICULE DE BREVET EUROPEEN

(11) **EP 2 026 401 B1**
(45) Date de publication et mention de la délivrance du brevet: **26.05.2010**
(21) Numéro de dépôt: 08305436.1
(22) Date de dépôt: 30.07.2008
(51) Int. Cl.: H01M 8/24

(54) **Procédé de fabrication d'embase pour système à pile à combustible, embase et système obtenus par un tel procédé**
Herstellungsverfahren eines Sockels für ein Brennstoffzellensystem, sowie durch dieses Verfahren erhaltener Sockel und erhaltenes System
Method of manufacturing a manifold for a fuel cell system, manifold and system obtained through said process

(30) Priorité: 06.08.2007 FR 0756962
(43) Date de publication de la demande: 18.02.2009
(73) Titulaire: L'AIR LIQUIDE, Société Anonyme pour l'Etude et l'Exploitation des Procédés Georges Claude, 75007 Paris (FR)
(72) Inventeur: Roussin-Bouchard, Xavier, 38112 Méaudre (FR); Sirac, Denis, 38430 Moirans (FR); Clary, Nancy, 38920 Crolles (FR)
(74) Mandataire: De Cuenca, Emmanuel Jaime

(56) Documents cités:
- EP-A- 1 104 877
- WO-A-2008/058165
- US-A1- 2002 148 427
- US-A1- 2005 064 269
- US-A1- 2006 035 135
- US-A1- 2006 060 244
- US-A1- 2006 177 710
- US-B1- 6 541 148

## Description

La présente invention est relative aux procédés de fabrication d'embases pour systèmes à pile à combustible, aux embases et systèmes obtenus par de tels procédés de fabrication.

Plus particulièrement, l'invention se rapporte à un procédé de fabrication d'embases pour systèmes à pile à combustible.

De façon classique, un système à pile à combustible comprend un bloc pile à combustible, qui comporte un compartiment cathodique, dans lequel l'oxygène de l'air est réduit, avec production d'eau, ainsi qu'un compartiment anodique, où se produit l'oxydation de l'hydrogène.

Une membrane de type échangeuse d'ions sépare physiquement les compartiments cathodique et anodique, alors que ces derniers se trouvent reliés par un circuit électrique extérieur.

Le compartiment cathodique est pourvu d'une conduite d'arrivée d'air, ainsi que d'une conduite d'évacuation de cet air appauvri en oxygène, mélangé à de l'eau.

De façon analogue, le compartiment anodique est mis en communication avec une ligne d'arrivée d'hydrogène, ainsi qu'une ligne d'évacuation de l'hydrogène consommé.

Ce dernier est mélangé avec une fraction d'eau, qui a été produite au niveau de la cathode et a traversé la membrane de séparation. De l'azote, ayant diffusé à travers cette membrane, est également mélangé à l'hydrogène, ainsi que d'éventuelles impuretés, initialement présentes dans l'hydrogène. Ces fluides circulent entre le bloc pile à combustible et une ou plusieurs embases à fluide du système, qui ont pour fonction, entre autres, d'assurer cette circulation dans l'ensemble du système.

De telles embases ont déjà été décrites dans de nombreux documents. Toutefois, elles sont classiquement réalisées sous la forme d'une pièce moulée formant plusieurs canaux sur laquelle sont rapportés des couvercles supérieur et inférieur offrant une fonction d'interface fluide des canaux avec les autres éléments du système. On pourra par exemple se référer à US 6,541,148. Le document EP 1104877 décrit un condenseur d'un système de climatisation de véhicule comprenant un collecteur métallique extrudé délimitant de façon monobloc deux canaux de fluide.
Le document WO 2008/0508165 (art antérieur au titre de l'article 54(3) CBE (1973)) décrit une pile à combustible munie d'une base monobloc moulée définissant des cavités ouvertes distinctes.

Toutefois, on cherche toujours à améliorer de telles embases, en particulier l'étanchéité aux gaz entre les différents canaux, tout en utilisant des procédés de fabrication qui soient fiables industriellement.

A cet effet, on prévoit un procédé de fabrication d'une embase à fluides pour système de pile à combustible comprenant les étapes suivante :
(a) on extrude une paraison de matière thermoplastique comprenant deux parois opposées,
(b)on place la paraison dans un moule définissant une première et une deuxième cavités espacées l'une de l'autre,
(c)on ferme le moule de manière à créer, dans une zone du moule comprise entre les première et deuxième cavités, une zone intermédiaire dans laquelle les deux parois de la paraison s'accolent de manière étanche au gaz,
(d)on insuffle un gaz à l'intérieur de la paraison dans chaque cavité, pour plaquer les parois de la paraison sur le moule dans chaque cavité pour former un conduit dans chaque cavité, et
(e) on ouvre le moule.

Grâce à ces dispositions, on met en oeuvre un procédé simple et bien établi pour réaliser en une fois une pièce présentant de manière intrinsèque une forte étanchéité entre ses canaux de fluide.

Dans certains modes de réalisation de l'invention, on peut éventuellement avoir recours en outre à l'une et/ou à l'autre des dispositions suivante :
- au cours de l'étape (b), on place un embout au niveau d'une cavité du moule,
   au cours de l'étape (d), la paraison est jointe à l'embout de manière étanche au gaz,
   le procédé comprenant en outre une étape (f) au cours de laquelle on perce la paraison pour former une communication fluide entre l'embout et le conduit formé dans la cavité ;
- préalablement à l'étape (b), on moule l'embout, et
   on fixe dans l'embout un organe de perforation adapté pour mettre en oeuvre l'étape (f) ;
- la paraison et l'embout sont réalisés dans des matériaux ayant le même point de fusion, préférablement dans le même matériau ;
- on emmanche de manière étanche au gaz dans un embout une extrémité d'un tube de raccordement comprenant au moins une autre extrémité adaptée pour être raccordée fluidiquement à un autre embout ou à une pile à combustible ;
- on place dans au moins un tube de raccordement un organe de régulation adapté pour réguler un débit de gaz dans le tube ;
- on assemble au moins deux pièces obtenues chacune par un procédé selon l'une des caractéristiques précédentes.

Selon l'invention, les au moins deux conduits (ou canaux) étanches l'un par rapport à l'autre vis-à-vis du fluide et la zone intermédiaire forment une pièce unique monobloc. C'est-à-dire que les au moins deux conduits « clos » et la zone intermédiaire sont formés d'une pièce monobloc et ne nécessitent pas une première pièce moulée coopérant avec un couvercle supplémentaire distinct (pour refermer lesdits conduits).

Dans certains modes de réalisation de l'invention, on peut éventuellement avoir recours en outre à l'une et/ou à l'autre des dispositions suivante :
- l'embase à fluides comprend en outre un embout réalisé dans un matériau présentant le même point de fusion que le matériau de la paraison, en communication fluide avec un conduit, et comprenant au moins une première extrémité jointe de manière étanche au gaz à un conduit, et une deuxième extrémité adaptée pour être raccordée fluidiquement à un autre embout ou à une pile à combustible.

Selon un autre aspect, l'invention se rapporte à un système de pile à combustible comprenant une pile à combustible et une embase à fluide comprenant au moins deux conduits séparés les uns des autres de manière étanche au gaz par une zone intermédiaire obtenue par accolement dans un moule de deux parois opposées d'une paraison extrudée, les conduits et la zone intermédiaire formant une seule pièce monobloc, **caractérisé en ce que** l'embase comprend en outre un embout réalisé dans un matériau présentant le même point de fusion que le matériau de la paraison, en communication fluide avec un conduit, et comprenant au moins une première extrémité jointe de manière étanche au gaz au conduit par fusion de matière avec la paraison, et une deuxième extrémité adaptée pour être raccordée fluidiquement à un autre embout ou à une pile à combustible, l'embase étant raccordée fluidiquement à la pile à combustible.

D'autres caractéristiques et avantages de l'invention apparaîtront au cours de la description suivante d'une de ses formes de réalisation, donnée à titre d'exemple non limitatif, en regard des dessins joints.
Sur les dessins :
- la figure 1 est une vue schématique en perspective d'un exemple de système de pile à combustible,
- la figure 2 est une vue en perspective d'un demi-moule selon un exemple de réalisation,
- la figure 3 est une vue en perspective d'un demi-moule complémentaire du demi-moule de la figure 2,
- les figures 4a-4e sont des vues schématiques en coupe transversale illustrant différentes étapes successives d'un procédé de fabrication utilisant un moule du type représenté sur les figures 2 et 3, et
- la figure 5 est une vue en perspective d'une embase à fluide obtenue selon un exemple de réalisation.

Sur les différentes figures, les mêmes références désignent des éléments identiques ou similaires.

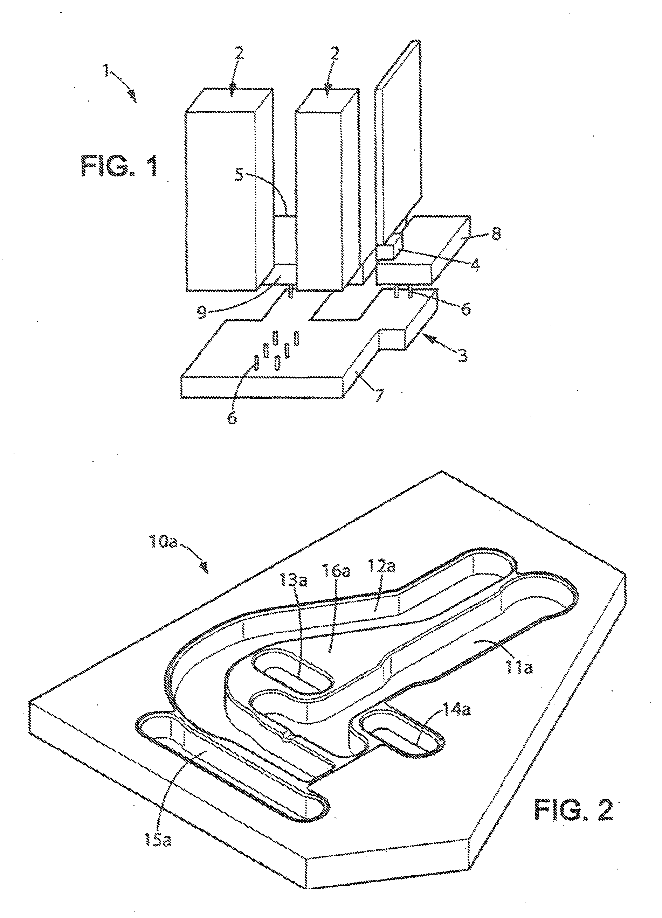

La figure 1 représente un exemple de système de pile à combustible 1 qui comporte classiquement une ou plusieurs piles 2 fournissant une alimentation électrique à une charge à partir d'écoulements de combustible (par exemple du dihydrogène) et d'un oxydant (par exemple de l'air) dans chacune des piles. Ces piles comportent des canaux qui reçoivent le combustible et l'oxydant et les guident vers des régions d'anode et de cathode appropriées de la pile. D'autres canaux guident également le combustible et l'oxydant non-consommés hors de la pile. De plus, d'autres fluides, comme des fluides réfrigérants, sont également susceptibles de circuler dans chaque pile.

Le système comporte également une embase 3 à fluide destinée à assurer la circulation des fluides dans les piles 2, ainsi qu'en communication avec les autres éléments du système de pile à combustible, tel que la ligne en combustible 4 (par exemple une ligne H₂), l'humidificateur 5 ou autre.

Dans l'exemple purement illustratif présenté, l'embase 3 est réalisée en trois parties distinctes reliées entre elles et aux autres composants du système par des canaux 6. Certains de ces canaux sont représentés non reliés aux piles à combustible sur la figure 1 pour faciliter la lisibilité du dessin. Ces trois parties sont une embase dite « inférieure » 7, une embase à oxydant 8 et une embase à combustible 9.

Dans ce qui suit, on décrit un procédé de fabrication de l'embase inférieure 7, étant entendu qu'un tel procédé pourrait être appliqué à la fabrication de l'embase à oxydant 8, de l'embase à combustible 9 ou même d'une embase unitaire regroupant ces trois parties dans un mode de réalisation en variante.

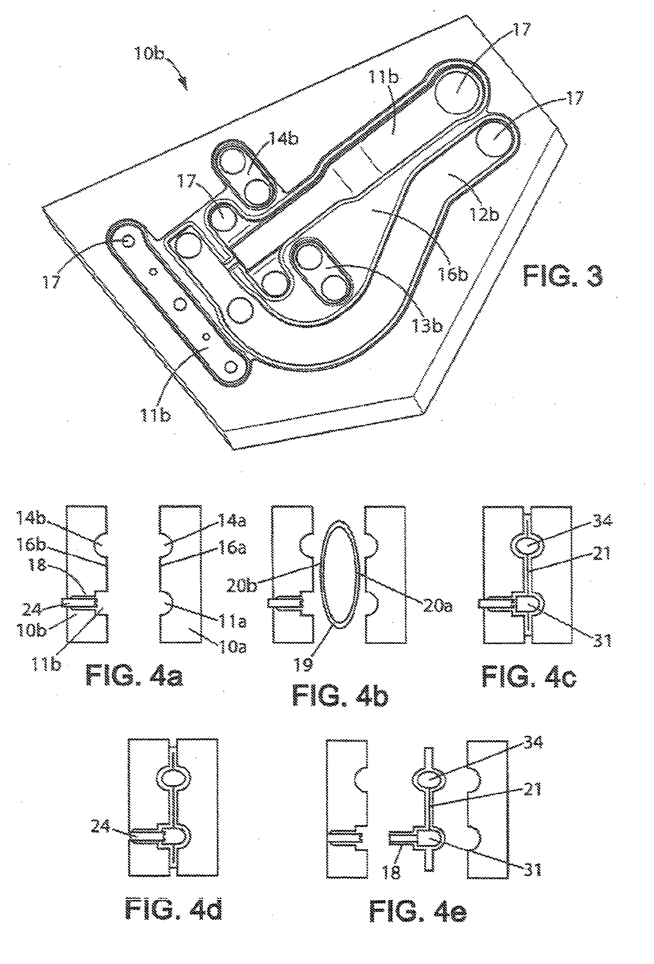

On dispose d'un moule en deux parties correspondant à la forme de base de l'embase inférieure 7. Ce moule présente une moitié inférieure 10a représentée sur la figure 2 et une moitié supérieure 10b complémentaire représentée sur la figure 3. La moitié inférieure est destinée à mouler la partie de fond de l'embase, et la moitié supérieure sa partie de couvercle.

Le moule définit un ensemble de cavités dont une cavité principale sensiblement linéaire 11a, 11b, une cavité principale sensiblement incurvée 12a, 12b, et de petites cavités transversales 13a, 13b, 14a, 14b et 15a, 15b.

Chaque cavité peut avoir un profil et/ou une profondeur variable selon les besoins de l'application.

Le moule comprend en outre plusieurs zones intermédiaires 16a, 16b de surfaces plane, reliant entre elles les cavités.

Dans la moitié supérieure 10b du moule, un certain nombre d'ouvertures 17 sont formées en fond des cavités.

Les figures 4a-4e représentent une coupe transversale fictive prise dans le moule au niveau d'une ouverture 17 d'une première cavité (par exemple la cavité 11b, 11a) et au niveau d'une portion d'une deuxième cavité (par exemple 14b, 14a) sans ouverture. Les deux cavités sont reliées entre elles par une zone intermédiaire plane 16b, 16a.

Comme cela est représenté sur la figure 4a, les deux parties 10a, 10b de moule sont situées à distance l'une de l'autre. On place un embout 18 adapté dans chacune des ouvertures 17 de la partie supérieure de moule 10b. Un tel embout comporte au moins une première extrémité destinée à être reliée aux conduits formés dans l'embase, et au moins une deuxième extrémité destinée à être raccordée fluidiquement à un composant externe ou à un autre conduit de l'embase. La surface externe de l'embout peut être formée pour fournir des reliefs de fixation. Cet embout est par exemple précédemment obtenu par moulage d'une pièce thermoplastique. L'embout cylindrique est enfilé sur un mandrin percuteur 24 mobile par rapport au moule.

Puis, comme représenté à la figure 4b, on extrude une paraison 19 de manière plastique dans le moule. Cette paraison est constituée d'un matériau thermoplastique, par exemple présentant un point de fusion identique (à environ 5°C près) au matériau des embouts. Il s'agit par exemple du même matériau. La paraison présente des parois internes 20a, 20b opposées.

Comme représenté sur la figure 4c, le moule est fermé. Dans la zone intermédiaire 16b, 16a du moule, les parois des moitiés 10a et 10b arrivent proches du contact, de sorte que les parois 20a, 20b de la paraison s'accolent à ce niveau, formant ainsi une zone intermédiaire 21 de l'embase 7. Un air chaud est insufflé, par des moyens connus, perpendiculairement au plan du dessin. Cet air chaud est insufflé dans la paraison au niveau de chaque cavité, de manière à repousser les parois externes de la paraison en contact avec la paroi du moule dans chaque cavité. On forme ainsi un premier conduit de fluide 31 dans la cavité 11a, 11b et un deuxième conduit de fluide 34 dans la cavité 14a, 14b, étanches l'un par rapport à l'autre vis-à-vis du fluide par l'intermédiaire de la zone intermédiaire 21. La déformation entraîne une variation d'épaisseur de la paraison. Cette dernière est minimum en fond du conduit. Les parties d'extrémité (en haut et en bas sur la figure) de la paraison sont également accolées entre elles. Au cours de cette opération, une fusion de matière s'opère dans la cavité 11b entre la matière de la paraison 19 et la première extrémité de l'embout 18. A ce stade, on n'a donc pas de communication fluide entre le canal et l'embout, qui est obturé en sa première extrémité par la matière de la paraison. La première extrémité de l'embout peut présenter une forme spécialement adaptée à fusionner avec la paraison.

Suite à l'insufflation, les canaux servant à insuffler l'air sont obturés, par exemple par écrasement de matière. On obtient alors un produit intermédiaire du procédé de fabrication.

L'utilisation de matériaux de points de fusion similaires permet d'obtenir des tolérances géométriques serrées et une étanchéité parfaite avec les autres éléments.

Comme cela est représenté sur la figure 4d, on actionne alors le mandrin percuteur 24 de manière à créer une ouverture entre le conduit 31 et l'intérieur de l'embout 18. Cette étape de perçage pourrait être alternativement mise en oeuvre plus tard au cours du procédé de fabrication, par reprise d'usinage par exemple.

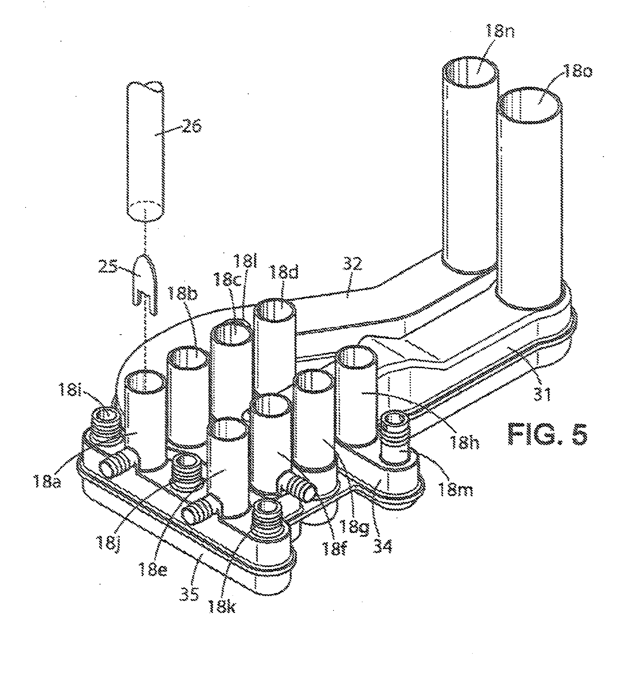

Comme cela est représenté sur la figure 4e, après refroidissement, on ouvre le moule en séparant les deux parties du moule, de manière à obtenir l'embase à fluide 7 représentée sur la figure 5.

On obtient alors une pièce monobloc avec des canaux pouvant avoir des formes complexes de géométries différentes avec des zones de jonction précises et très éloignées du plan de joint.

La figure 5 représente une embase 7 obtenue par le procédé présenté ci-dessus, comportant une pluralité de conduits :
- 31, qui correspond aux cavités 11a, 11b,
- 32 qui correspond aux cavités 12a, 12b,
- 34 qui correspond aux cavités 14a, 14b,
- 35 qui correspond aux cavités 15a, 15b, et
- un conduit non visible sur cette figure correspondant aux cavités 13a, 13b.

Par ailleurs, une pluralité d'embouts 18a-18o sont connectés fluidiquement à des conduits respectifs.

A ce stade, on peut prévoir d'introduire dans un ou plusieurs embouts 18a-18o des organes de réglages 25 tels que des billes, valves et/ou clapets, qui permettent de réguler l'écoulement de fluide dans l'embout, par exemple en vue d'implémenter une recirculation de fluide telle que décrite dans WO 03/005,472.

Les embouts 18a-18o peuvent servir à relier l'embase fluide à un autre composant du système, tel que par exemple à une autre embase ou aux composants identifiés ci-dessus de la pile à combustible. A cet effet, on peut par exemple emmancher de manière étanche un tuyau 26 à l'extrémité libre de l'embout opposée à l'extrémité débouchant dans le conduit.

A titre purement illustratif, dans le présent mode de réalisation, les embouts 18i et 181 sont reliés entre eux, les embouts 18k et 18m sont reliés entre eux, les embouts 18a et 18e sont reliés à l'embase H₂, les embouts 18n et 18o sont reliés à l'embase air, les embouts 18a-18h étant reliés aux piles à combustible.

En variante ou additionnellement, plutôt que de relier l'embase représentée sur la figure 5 aux différents composants du système par des tuyaux 26 externes, on pourrait utiliser une ou plusieurs autres pièces également obtenues par le procédé de réalisation décrit ci-dessus. On peut ainsi mettre en oeuvre un croisement des conduits avec une grande étanchéité.

## Revendications

1. Procédé de fabrication d'une embase à fluides pour système de pile à combustible comprenant les étapes suivantes :
(a) on extrude une paraison (19) de matière thermoplastique comprenant deux parois opposées,
(b)on place la paraison dans un moule (10a, 10b) définissant une première et une deuxième cavités (11a 11b, 14a, 14b) espacées l'une de l'autre,
(c)on ferme le moule de manière à créer, dans une zone (16a, 16b) du moule comprise entre les première et deuxième cavités, une zone intermédiaire dans laquelle les deux parois de la paraison s'accolent de manière étanche au gaz,
(d)on insuffle un gaz à l'intérieur de la paraison dans chaque cavité, pour plaquer les parois de la paraison sur le moule dans chaque cavité pour former un conduit (31, 34) dans chaque cavité, et
(e)on ouvre le moule.

2. Procédé de fabrication selon la revendication 1 dans lequel,
au cours de l'étape (b), on place un embout (18) au niveau d'une cavité du moule,
au cours de l'étape (d), la paraison (19) est jointe à l'embout de manière étanche au gaz,
le procédé comprenant en outre une étape (f) au cours de laquelle on perce la paraison pour former une communication fluide entre l'embout et le conduit formé dans la cavité.

3. Procédé de fabrication selon la revendication 2 dans lequel,
- préalablement à l'étape (b), on moule l'embout (18), et
- on fixe dans l'embout un organe de perforation adapté pour mettre en oeuvre l'étape (f).

4. Procédé de fabrication selon la revendication 2 ou 3 dans lequel la paraison (19) et l'embout (18) sont réalisés dans des matériaux ayant le même point de fusion, préférablement dans le même matériau.

5. Procédé de fabrication selon l'une des revendications 2 à 4 dans lequel on emmanche de manière étanche au gaz dans un embout (18) une extrémité d'un tube de raccordement (26) comprenant au moins une autre extrémité adaptée pour être raccordée fluidiquement à un autre embout ou à une pile à combustible.

6. Procédé de fabrication selon la revendication 5 dans lequel on place dans au moins un tube de raccordement un organe de régulation (25) adapté pour réguler un débit de gaz dans le tube.

7. Procédé de fabrication d'une embase de fluide de pile à combustible dans lequel on assemble au moins deux pièces obtenues chacune par un procédé selon l'une des revendications précédentes.

8. Système de pile à combustible comprenant une pile à combustible et une embase à fluide comprenant au moins deux conduits (31, 34) séparés les uns des autres de manière étanche au gaz par une zone intermédiaire (21) obtenue par accolement dans un moule de deux parois opposées d'une paraison extrudée, les conduits et la zone intermédiaire formant une seule pièce monobloc, **caractérisé en ce que** l'embase comprend en outre un embout (18) réalisé dans un matériau présentant le même point de fusion que le matériau de la paraison, en communication fluide avec un conduit, et comprenant au moins une première extrémité jointe de manière étanche au gaz au conduit par fusion de matière avec la paraison, et une deuxième extrémité adaptée pour être raccordée fluidiquement à un autre embout ou à une pile à combustible, l'embase étant raccordée fluidiquement à la pile à combustible.

## Claims

1. Method for fabricating a fluid connector for fuel cell system comprising the following steps:
(a) a thermoplastic parison (19) comprising two opposite walls is extruded,
(b) the parison is placed in a mould (10a, 10b) defining first and second cavities (11a, 11b, 14a, 14b) spaced from one another,
(c) the mould is closed in order to create, in a zone (16a, 16b) of the mould lying between the first and second cavities, an intermediate zone in which the two walls of the parison are joined in a gastight manner,
(d) a gas is blown inside the parison into each cavity, to press the walls of the parison on the mould in each cavity to form a conduit (31, 34) in each cavity, and
(e) the mould is opened.

2. Fabrication method according to Claim 1, in which,
during step (b), an end piece (18) is placed in a cavity of the mould,
during step (d), the parison (19) is attached to the end piece in a gastight manner,
the method further comprising a step (f) during which the parison is perforated to form a fluid communication between the end piece and the conduit formed in the cavity.

3. Fabrication method according to Claim 2, in which,
- prior to step (b), the end piece (18) is moulded, and
- a perforation member adapted to implement step (f) is fixed in the end piece.

4. Fabrication method according to either of Claims 2 and 3, in which the parison (19) and the end piece (18) are made from materials having the same melting point, preferably from the same material.

5. Fabrication method according to one of Claims 2 to 4, in which one end of a connecting tube (26) is force fitted into the end piece (18) in a gastight manner, the said connecting tube (26) comprising at least one other end adapted to be fluidly connected to another end piece or to a fuel cell.

6. Fabrication method according to Claim 5, in which a control member (25) adapted for controlling the gas flow in the connecting tube is placed in at least one connecting tube.

7. Method for fabricating a fuel cell fluid connector, in which at least two parts are assembled, each obtained by a method according to one of the preceding claims.

8. Fuel cell system comprising a fuel cell and a fluid connector comprising at least two conduits (31, 34) separated from one another in a gastight manner by an intermediate zone (21) obtained by joining two opposite walls of an extruded parison in a mould, the conduits and the intermediate zone forming a single piece, **characterized in that** the connector further comprises an end piece (18) made from a material having the same melting point as the parison material, in fluid communication with a conduit, and comprising at least one first end joined in a gastight manner to the conduit by fusion of material with the parison, and a second end adapted to be fluidly connected to another end piece or to a fuel cell, the connector being fluidly connected to the fuel cell.

## Patentansprüche

1. Verfahren zur Herstellung eines Fluidsockels für ein Brennstoffzellensystem, das die folgenden Schritte umfasst:
(a) Extrudieren eines Vorformlings (19) aus thermoplastischem Material, der zwei einander gegenüberliegende Wände umfasst;
(b) Platzieren des Vorformlings in ein Formwerkzeug (10a, 10b), das eine erste und eine zweite Kavität (11a, 11b, 14a, 14b), die voneinander beabstandet sind, definiert,
(c) Schließen des Formwerkzeugs, um in einem Bereich (16a, 16b) des Formwerkzeugs, der zwischen der ersten und der zweiten Kavität liegt, einen Zwischenbereich zu erzeugen, in dem die beiden Wände des Vorformlings gasdicht zusammengefügt sind,
(d) Einblasen eines Gases in das Innere des Vorformlings in jede Kavität, um die Wände des Vorformlings an das Formwerkzeug in jeder Kavität zu pressen, um eine Leitung (31, 34) in jeder Kavität zu bilden, und
(e) Öffnen des Formwerkzeugs.

2. Herstellungsverfahren nach Anspruch 1, bei dem
während des Schritts (b) ein Endstück (18) in einer Kavität des Formwerkzeugs platziert wird,
während des Schritts (d) der Vorformling (19) gasdicht an dem Endstück befestigt wird,
das Verfahren des Weiteren einen Schritt (f) umfasst, während dessen der Vorformling perforiert wird, um einen Fluidsockel zwischen dem Endstück und der in der Kavität gebildeten Leitung zu bilden.

3. Herstellungsverfahren nach Anspruch 2, wobei
- vor Schritt (b) das Endstück (18) geformt wird, und
- in dem Endstück ein Perforationsglied befestigt wird, um Schritt (f) durchzuführen.

4. Herstellungsverfahren nach Anspruch 2 oder 3, wobei der Vorformling (19) und das Endstück (18) aus Materialien, die den gleichen Schmelzpunkt aufweisen, und vorzugsweise aus dem gleichen Material hergestellt sind.

5. Herstellungsverfahren nach einem der Ansprüche 2 bis 4, wobei in einem Endstück (18) ein Ende eines Verbindungsrohrs (26) gasdicht eingepresst wird, wobei das Verbindungsrohr mindestens ein anderes Ende aufweist, das zur Fluidverbindung mit einem anderen Endstück oder einer Brennstoffzelle ausgeführt ist.

6. Herstellungsverfahren nach Anspruch 5, wobei in mindestens einem Verbindungsrohr ein Regulierungsglied (25) platziert wird, das zur Regulierung eines Gasdurchflusses in dem Rohr ausgeführt ist.

7. Verfahren zur Herstellung eines Fluidsockels für eine Brennstoffzelle, wobei mindestens zwei Teile zusammengefügt werden, die jeweils durch ein Verfahren nach einem der vorhergehenden Ansprüche erhalten werden.

8. Brennstoffzellensystem, das eine Brennstoffzelle und einen Fluidsockel mit mindestens zwei Leitungen (31, 34) umfasst, die durch einen Zwischenbereich (21) gasdicht voneinander getrennt sind, der durch Zusammenfügen in einem Formwerkzeug von zwei einander gegenüberliegenden Wänden eines extrudierten Vorformlings erhalten wird, wobei die Leitungen und der Zwischenbereich ein einziges einstückiges Teil bilden, **dadurch gekennzeichnet, dass** der Sockel des Weiteren ein Endstück (18) umfasst, das aus einem Material hergestellt ist, das den gleichen Schmelzpunkt wie das Material des Vorformlings aufweist, mit einer Leitung in Fluidverbindung steht und mindestens ein erstes Ende, das durch stoffschlüssiges Verbinden mit dem Vorformling gasdicht mit der Leitung verbunden ist, und ein zweites Ende, das zur Fluidverbindung mit einem anderen Endstück oder einer Brennstoffzelle ausgeführt ist, aufweist, wobei der Sockel mit der Brennstoffzelle in Fluidverbindung steht.
